(19) Europäisches Patentamt
European Patent Office
Office européen des brevets

(11) **EP 4 528 351 A1**

(12) **EUROPEAN PATENT APPLICATION**
published in accordance with Art. 153(4) EPC

(43) Date of publication:
**26.03.2025 Bulletin 2025/13**

(51) International Patent Classification (IPC):
***G02B 21/00*** (2006.01)   ***G01N 21/64*** (2006.01)

(21) Application number: **24790815.5**

(86) International application number:
**PCT/CN2024/082135**

(22) Date of filing: **18.03.2024**

(87) International publication number:
**WO 2024/217203 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.04.2023 CN 202310402295**

(71) Applicant: **Wuhan Smartview Biotechnology Co., Ltd**
**Wuhan, Hubei 430000 (CN)**

(72) Inventors:
• **ZHAO, Yuxuan**
  **Wuhan, Hubei 430000 (CN)**
• **ZHAO, Fang**
  **Wuhan, Hubei 430000 (CN)**
• **FEI, Peng**
  **Wuhan, Hubei 430000 (CN)**

(74) Representative: **Scholl, Matthias**
**Friedrichstraße 114a**
**10117 Berlin (DE)**

(54) **SINGLE-OBJECTIVE LIGHT-SHEET THREE-DIMENSIONAL FLUORESCENCE IMAGING SYSTEM**

(57)   A single-objective light-sheet three-dimensional fluorescence imaging system, comprising an illumination objective (1), a scanning lens group for relaying, a galvanometer (4), an illumination module and an imaging module, wherein the scanning lens group comprises first and second scanning lenses (3, 5), principal optical axes of the first and second scanning lenses (3, 5) being arranged to be orthogonal and confocal, and the common focus of the first and second scanning lenses (3, 5) falling at the center of the galvanometer (4). Fluorescence emitted by a sample excitation plane is collected by the illumination objective (1), then enters the scanning lens group in the direction opposite to illumination light, and enters the imaging module for imaging, so that the projection of the sample excitation plane on a plane orthogonal to the principal optical axis of the illumination objective (1) is obtained. The imaging module comprises an area array detector (8). Continuously acquiring the projection of the sample excitation plane on the plane orthogonal to the principal optical axis of the illumination objective (1) takes the place of traditional perfect imaging of the sample excitation plane, such that two remote imaging objectives used for aberration correction are eliminated, and limitations on optical parameters of the illumination objective (1) are removed, thus conveniently implementing in-situ magnification switching, and allowing for a fast imaging speed.

FIG. 1

**Description**

BACKGROUND

The disclosure relates to the field of microimaging, and more particularly to a three dimensional fluorescence imaging device comprising single-objective light sheet.

Conventional light sheet microscopes have a light sheet illumination light path and a fluorescence detection light path, and the two paths are orthogonal to each other and generated by a detection objective and an illumination objective, respectively. The overall light path is complicated and difficult to construct. A light sheet microscope can couple the illumination and detection light paths into one path, and when employing one objective lens to simultaneously illuminate and detect the sample, the light sheet microscope is called a single-objective light sheet microscope.

However, the use of a single objective for simultaneous illumination and imaging results in phase difference due to the oblique intersection of the light sheet illumination light path and the fluorescence detection light path, and the involved single objective must be a high numerical aperture objective. To correct the phase difference and realize perfect imaging, three objective lenses are often used for remote focusing, which leads to a complicated imaging system with low applicability. Moreover, objectives with high numerical apertures mean high magnification and small fields of view, thus limiting the field of view of single-objective light sheet microscopes.

All the time, the commercialization of the single-objective light-sheet fluorescence microscopy has been greatly limited by the fact that single-objective light-sheet fluorescence imaging devices cannot achieve in-situ magnification switching, and the sample cannot be observed at different magnifications. Chinese Patent Publication No. CN115685515A provides a co-axial imaging system including a single objective light sheet, where a second objective and a third objective are coaxially disposed, thus lifting the limitation on the numerical aperture (NA) value of the illumination objective. However, although in situ magnification switching has been achieved, the system sacrifices the field of view and imaging speed. The two-dimensional imaging of the excitation plane can be achieved through stacking within one scanning cycle, while three-dimensional imaging requires sample displacement.

SUMMARY

To solve the above-mentioned disadvantages in the related art, the disclosure provides a single-objective microscopic imaging device, aiming to continuously collect the projection of the excitation plane of a sample on the orthogonal plane of the main optical axis of an illumination objective, instead of the traditional perfect imaging of the excitation plane of the sample, and then perform three-dimensional reconstruction to obtain the three-dimensional fluorescence data of the sample. The disclosure omits two remote imaging objectives used for phase difference correction, lifts the optical parameter limitations on the illumination objective, and conveniently achieves in-situ magnification switching. Therefore, the disclosure solves the existing technical problem of inability to achieve in-situ magnification switching caused by the strict optical parameter limitations on the three objectives due to the requirement of perfect imaging data of the excitation plane of the sample, or the technical problem of the slow imaging speed caused by the use of row by row exposure for in-situ magnification switching.

In one aspect, the disclosure provides a single-objective microscopic imaging device, comprising: an illumination objective, a scanning lens group for relay, a galvanometer, an illumination module, and an imaging module;

the scanning lens group comprises a first scanning lens and a second scanning lens; main optical axes of the first scanning lens and the second scanning lens are orthogonal and confocal; a common focus of the first scanning lens and the second scanning lens is disposed on a central part of the galvanometer;

the illumination module is configured to generate an illumination laser beam; the illumination laser beam passes through the scanning lens group and enters a rear pupil plane of the illumination objective, forming a light sheet having an inclination angle $\alpha$ projected onto an excitation plane of a sample to excite fluorescence; the excitation plane is diagonally intersected with a main optical axis of the illumination objective, and an intersection angle of the excitation plane and the main optical axis of the illumination objective is an inclination angle $\theta$ of the light sheet;

the fluorescence emitted from the excitation plane of the sample is collected by the illumination objective, enters the scanning lens group in an opposite direction of an illumination light of the illumination module, and reaches the imaging module for imaging, thus obtaining a projection of the excitation plane of the sample on an orthogonal plane of the main optical axis of the illumination objective; and

the imaging module comprises an area array detector.

In a class of this embodiment, the single-objective microscopic imaging device further comprises a sample carrier; the sample carrier comprises an axial feeding device configured to drive the sample to move along an axis of the illumination objective; an axial position changes in a stepwise or continuous manner, and during a rotation period T of the galvanometer, an axial displacement L satisfies the following inequality:

$$L \leq s * sin\theta;$$

where, s represents a Rayleigh range of the light sheet, and $\theta$ is an inclination angle of the light sheet with respect to a scanning direction.

In a class of this embodiment, under the action of the galvanometer, the excitation plane of the sample is scanned in a direction perpendicular to the main optical axis of the illumination objective; after the fluorescence is reversely scanned by the galvanometer, projections of the excitation plane of the sample on the orthogonal plane of the main optical axis of the illumination objective are obtained sequentially at a position of the area array detector of the imaging module; and the projections are reconstructed and stacked, to yield a three-dimensional fluorescence image of the sample.

In a class of this embodiment, an angle of the galvanometer is changed stepwise or continuously, so that the excitation plane of the sample is scanned in the direction perpendicular to the main optical axis of the illumination objective, and a displacement d of the excitation plane of the sample corresponding to adjacent projections in the scanning direction satisfies the following condition:

$$d \in [\frac{h}{3sin\theta}, \frac{h}{2sin\theta}]$$

where, $h$ represents a thickness of the light sheet, and $\theta$ is an inclination angle of the light sheet with respect to the scanning direction.

In a class of this embodiment, a tube lens assembly is disposed between the scanning lens group and the illumination objective; the tube lens assembly is fixed in position relative to the scanning lens group for collimating a fluorescence signal collected by the illumination objective.

In a class of this embodiment, the illumination module comprises a collimated laser and a modulator; the modulator comprises a mask plate; the illumination laser beam is modulated by the modulator to form a predetermined light sheet; the predetermined light sheet passes through a dichroic mirror, is merged with a fluorescent light path, and enters the scanning lens group.

In a class of this embodiment, the thickness of the light sheet is between 0.3 and 5 $\mu$m.

In a class of this embodiment, the imaging module further comprises a converging lens, and the area array detector is disposed on a focal plane of the converging lens; and the area array detector is configured to obtain the projection of the excitation plane of the sample on the orthogonal plane of the main optical axis of the illumination objective in a time sequence of control signals.

In a class of this embodiment, the single-objective microscopic imaging device further comprises a depth of field extension module disposed between the scanning lens group and the converging lens for expanding a depth of field of the light sheet along the axis of an objective.

In a class of this embodiment, the depth of field extension module is a phase modulation mask, a spatial light modulator, an axial prism, or a prism group.

The following advantages are associated with the single-objective three-dimensional fluorescence imaging device of the disclosure. The single-objective three-dimensional fluorescence imaging device utilizes a galvanometer to scan and collect projection information. The projection of the excitation plane of a sample on the orthogonal plane of the main optical axis of the illumination objective, instead of the traditional perfect imaging of the excitation plane of the sample, is employed for three-dimensional reconstruction to obtain the three-dimensional fluorescence data of the sample. Only one illumination objective is employed for illumination and signal acquisition of the sample, and in combination with a three-dimensional reconstruction algorithm, the three-dimensional structural information of the biological sample can be quickly and conveniently obtained. More importantly, when a single objective is used for three-dimensional fluorescence imaging of the light sheet, the two remote imaging objectives used for correcting phase differences are omitted. The optical path construction is not limited by the magnification of the illumination objective, and when magnification switching is needed, an appropriate illumination objective can be directly used in situ, thus facilitating in-situ magnification switching without affecting imaging speed. The imaging speed is comparable to existing light sheet fluorescence microscopes and much higher than confocal microscopes, greatly expanding the application fields of light sheet fluorescence microscopes from scientific research imaging to commercial applications of detection and imaging.

BRIEF DESCRIPTION OF THE DRAWINGS

FIG. 1 is an optical path diagram of a single-objective three-dimensional fluorescence imaging device according to Example 1 of the disclosure;

FIG. 2 is an optical path diagram of a single-objective three-dimensional fluorescence imaging device according to Example 2 of the disclosure; and

FIG. 3 is a schematic diagram of the control signals according to one embodiment of the disclosure.

In the drawings, the following reference numbers are used: 1. Illumination objective; 2. Tube lens; 3. First scanning lens group; 4. Galvanometer; 5. Second scanning lens; 6. Lens; 7. Converging lens; 8. Detector; 9. Laser device; 10. Depth of field expansion module.

DETAILED DESCRIPTION

To further illustrate the disclosure, embodiments detailing a single-objective microscopic imaging device are described below. It should be noted that the following embodiments are intended to describe and not to limit the disclosure.

One embodiment of the disclosure provides a single-objective microscopic imaging device, comprising: an illumination objective, a scanning lens group for relay, a galvanometer, an illumination module, an imaging module, and a sample carrier.

The scanning lens group comprises a first scanning lens and a second scanning lens; main optical axes of the first scanning lens and the second scanning lens are orthogonal and confocal; a common focus of the first scanning lens and the second scanning lens is disposed on a central part of the galvanometer;

the illumination laser beam passes through the scanning lens group and enters a rear pupil plane of the illumination objective, forming a light sheet having an inclination angle $\alpha$ projected onto an excitation plane of a sample to excite fluorescence; the excitation plane is diagonally intersected with a main optical axis of the illumination objective, and an intersection angle of the excitation plane and the main optical axis of the illumination objective is an inclination angle $\theta$ of the light sheet; and

the fluorescence emitted from the excitation plane of the sample is collected by the illumination objective, enters the scanning lens group in an opposite direction of an illumination light of the illumination module, and reaches the imaging module for imaging, thus obtaining a projection of the excitation plane of the sample on an orthogonal plane of the main optical axis of the illumination objective.

The imaging module comprises an area array detector.

Under the action of the galvanometer, the excitation plane of the sample is scanned in a direction perpendicular to the main optical axis of the illumination objective; after the fluorescence is reversely scanned by the galvanometer, projections of the excitation plane of the sample on the orthogonal plane of the main optical axis of the illumination objective are obtained sequentially at a position of the area array detector of the imaging module; the projections are reconstructed and stacked, to yield a three-dimensional fluorescence image of the sample.

The angle of the galvanometer is changed stepwise or continuously, so that the excitation plane of the sample is scanned in the direction perpendicular to the main optical axis of the illumination objective, and a displacement d of the excitation plane of the sample corresponding to adjacent projections in the scanning direction satisfies the following condition:

$$d \in [\frac{h}{3sin\theta}, \frac{h}{2sin\theta}]$$

where, h represents a thickness of the light sheet, and $\theta$ is an inclination angle of the light sheet with respect to the scanning direction.

By adjusting the rotation of the galvanometer to match the imaging speed of the camera, the displacement *d* of the excitation plane of the sample corresponding to adjacent projections in the scanning direction can be controlled to be within an appropriate range, so as to avoid the missed sampling caused by too sparse camera sampling or fluorescence information crosstalk caused by too dense camera sampling, thus improving the imaging quality after 3D reconstruction.

The imaging device of the disclosure utilizes the scanning lens group and the galvanometer to scan the excitation plane of the sample, and to collect the projection data instead of perfectly imaging to form a three-dimensional image, thus avoiding the need for perfect imaging of the excitation plane of the sample. In addition, the disclosure does not require the second and third objective lenses for correcting phase differences, eliminates the limitation on the numerical aperture (NA) value of the illumination objective, and can achieve in-situ magnification by utilizing appropriate illumination objectives. When there is a need for magnification switching, just to replace the current illumination objective with a desired one, other components of the imaging device do not need to be replaced or reregistered, and the optical path does not need to be rebuilt.

However, because the 3D images are reconstructed using projections instead of perfect images, the crosstalk caused by projection should be prevented. If the projection shifts on the detector with the scanning of the excitation plane, projection crosstalk will cause misalignment in the process of restoring to the excitation plane of the sample, resulting in a failure of 3D reconstruction. In the disclosure, the galvanometer is applied to both the illumination path and the detection path. Because the excitation path and the detection path pass through the galvanometer in two opposite directions, the imaging position on the detector remains the same after scanning and reverse scanning. The corresponding frame images are obtained in a chronological order, and the imaging of the detector changes continuously and is not necessarily synchronized with the phase of the galvanometer. This can effectively avoid the failure of 3D reconstruction caused by projection crosstalk, without the need for complex galvanometer control to scan multiple times to avoid projection crosstalk.

A lens, preferably, a tube lens assembly, is disposed between the scanning lens group and the illumination objective; the tube lens assembly is fixed in position relative to the scanning lens group for collimating a fluorescence signal collected by the illumination objective, so as to be compatible with objectives having different magnifications, thus improving the imaging quality of different objectives.

The illumination module is configured to generate an illumination laser beam; particularly, the illumination module comprises a collimated laser and a modulator; the modulator comprises a mask plate; the illumination laser beam is modulated by the modulator to form a predetermined light sheet; the predetermined light sheet passes through a dichroic mirror, is merged with a fluorescent light path, and enters the scanning lens group. The thickness of the light sheet is between 0.3 and 5 μm. An excessively thick light sheet leads to severe projection crosstalk, while an excessively thin light sheet is detrimental to 3D imaging stacking. Moreover, the thinner the light sheet, the shorter the Rayleigh distance, increasing the cost of axial scanning. During designing, it is necessary to consider the relationship between the Rayleigh distance of the light sheet and the depth of field of the objective lens.

The imaging module further comprises a converging lens, and the area array detector is disposed on the focal plane of the converging lens; and the area array detector is configured to obtain the projection of the excitation plane of the sample on the orthogonal plane of the main optical axis of the illumination objective in a time sequence of control signals. Optionally, the converging lens is a tube lens assembly.

The imaging device further comprises a depth of field extension module disposed between the scanning lens group and the converging lens. The depth of field extension module is a phase modulation mask, a spatial light modulator, an axial prism, or a prism group. The depth of field extension module is configured to expand the depth of field of the light sheet along the axis of the illumination objective, and expand the field of view of a single frame image, so that the camera can obtain more depth information in one exposure, thereby increasing the displacement step of the objective lens in its axis and reducing the number of axial scans.

The sample carrier comprises an axial feeding device configured to drive the sample to move along an axis of the illumination objective; an axial position of the sample changes in a stepwise or continuous manner, and during a rotation period T of the galvanometer, an axial displacement L satisfies the following inequality:

$$L \leq s * sin\theta;$$

where, s represents a Rayleigh range of the light sheet, and θ is an inclination angle of the light sheet with respect to a scanning direction.

Example 1

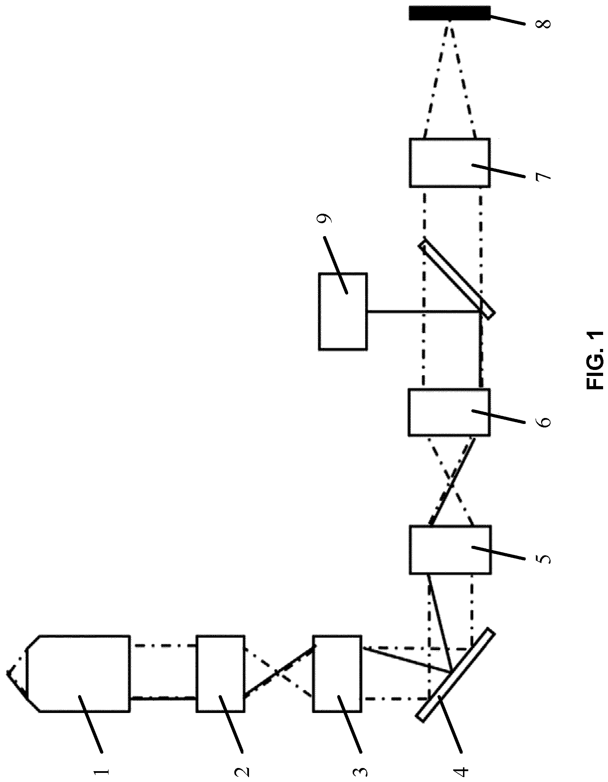

As shown in FIG. 1, the example provides a single-objective microscopic imaging device, comprising: an illumination objective, a scanning lens group for relay, a galvanometer, an illumination module, an imaging module, and a sample carrier.

Illumination module: the laser light from the laser device is collimated and expanded as a laser device 9, which is emitted in parallel and reflected to the scanning lens group through a dichroic mirror.

Scanning lens group: the light emitted from the second scanning lens 5 is focused on the focal point of the galvanometer 4, passes through the first scanning lens 3 and the lens 2 to reach the rear pupil plane of the illumination objective 1, and passes through the illumination objective 1, to form a light sheet in the sample plane and excite a sample fluorescence. The galvanometer is conjugated with the rear pupil plane of the illumination objective, and the light sheet scans horizontally in the sample plane with the vibration of the galvanometer 4. The parameters of the light sheet are determined by the lens group 2. The fluorescence excited by the laser device is collected by the same illumination objective 1, passes through the scanning lens group and the first scanning lens 3, is descanned by the galvanometer 4, enters the second scanning lens 5 in the form of a stable scattered light, exits in parallel out of the second scanning lens 5, and passes through the dichroic mirror.

Imaging module: The dichroic mirror reflects shorter wavelengths of laser, and transmits longer wavelengths of fluorescence. The parallel light is finally converged on the photosensitive surface of the area array detector 8 through a converging lens 7 made of tube lenses.

The sample carrier (not shown in the drawings) comprises an axial (Z direction) feeding device driving the sample to move along the axis of the illumination objective; the axial position of the sample changes in a stepwise or continuous manner, and during a rotation period T of the galvanometer, the axial displacement L satisfies the following inequality:

$$L \leq s * sin\theta;$$

where, s represents a Rayleigh range of the light sheet, and θ is an inclination angle of the light sheet with respect to a scanning direction.

In addition to feeding in the Z-direction, the sample carrier uses a two-dimensional displacement platform to quickly find the field of view.

When the single-objective microscopic imaging device of the disclosure employs a 60 × 1.3 NA objective 1, the width of the incident light of the light sheet into the objective 1 is 3.54 mm; the light sheet deviates from the center of the posterior pupil of the objective 1 by 2.13 mm; the inclination angle θ between the light sheet and the scanning direction is 54°; the thickness of the light sheet is 407 nm; the angle of the galvanometer is changed stepwise or continuously, and the velocity is determined by the thickness h and the inclination angle $\theta$ of the light sheet.

Example 2

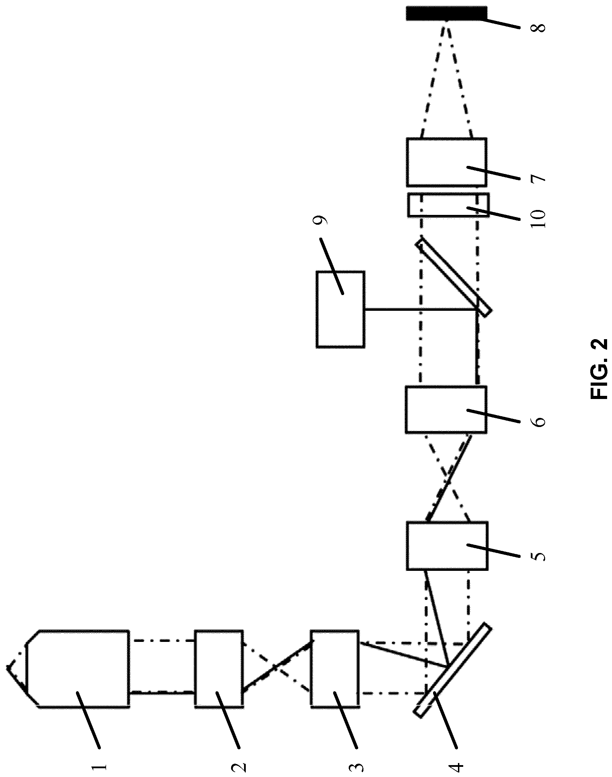

As shown in FIG. 2, the example provides a single-objective microscopic imaging device, comprising: an illumination module, a scanning and descanning module, a sample carrying module, a depth of field expansion module, and an imaging module. The illumination module and the scanning and descanning module are similar to that in Example 1. The difference from Example 1 is that after passing through the second scanning lens 5, the parallel light emitted from the lens 6 passes through the dichroic mirror and the depth of field expansion module, and then is focused by the converging lens 7 on the detector 8. The depth of field expansion module 10 includes but is not limited to a conical lens, a diffractive optical element, a splitter prism, and so on.

When the single-objective microscopic imaging device of the disclosure employs a $60 \times 1.3$ NA objective 1, due to the presence of the depth of field expansion module, the thickness of the light sheet on the detection side increases from 216 nm to 439 nm, and the field of view of a single frame image expands to 4080 nm, increased by about 7 times. The angle of the galvanometer is changed stepwise or continuously, and the velocity is determined by the thickness $h$ and the inclination angle $\theta$ of the light sheet. Due to the expansion of the field of view of the single frame, the scanning step of the galvanometer becomes longer, which accelerates the scanning speed of the galvanometer. Simultaneously, the axial displacement step of the objective lens is increased, thus reducing the number of axial scans of the objective lens.

Example 3

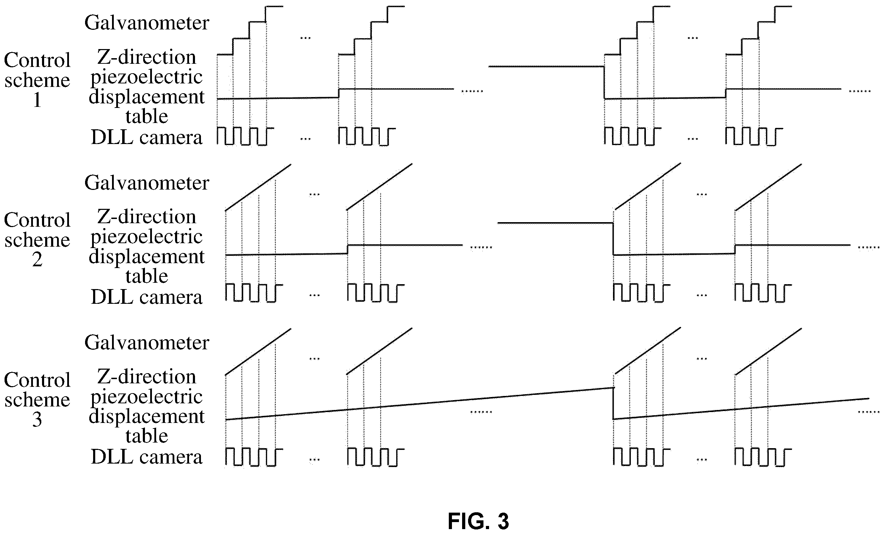

The control time sequence of the galvanometer, the sample carrier, and the area array detector of the single-objective microscopic imaging device in Examples 1 and 2 is as shown in FIG. 3.

In the control scheme 1, the angle of the galvanometer changes stepwise to achieve lateral scanning.

The area array detector and the galvanometer synchronously acquire the projection of the excitation plane of the sample onto the orthogonal plane of the main optical axis of the illumination objective, and the displacement d of the excitation plane of the sample corresponding to adjacent projections in the scanning direction satisfies the following condition:

$$d \in [\frac{h}{3sin\theta}, \frac{h}{2sin\theta}]$$

where, $h$ represents a thickness of the light sheet, and $\theta$ is an inclination angle of the light sheet with respect to the scanning direction.

The sample carrier moves stepwise along the Z-direction to realize axial scanning, and the sample carrier moves by one step in the Z-direction for every cycle of rotation of the galvanometer.

In the control scheme 2, the angle of the galvanometer changes continuously to achieve lateral scanning.

The area array detector acquires projection of the excitation plane of the sample onto the orthogonal plane of the main optical axis of the illumination objective according to its own intrinsic timing sequence, and the displacement d of the excitation plane of the sample corresponding to adjacent projections in the scanning direction satisfies the following condition:

$$d \in [\frac{h}{3sin\theta}, \frac{h}{2sin\theta}]$$

where, $h$ represents a thickness of the light sheet, and $\theta$ is an inclination angle of the light sheet with respect to the scanning direction.

The sample carrier moves stepwise along the Z-direction to realize axial scanning, and the sample carrier moves by one step in the Z-direction for every cycle of rotation of the galvanometer.

In the control scheme 3, the angle of the galvanometer changes continuously to achieve lateral scanning.

The area array detector acquires projection of the excitation plane of the sample onto the orthogonal plane of the main optical axis of the illumination objective according to its own intrinsic timing sequence, and the displacement $d$ of the excitation plane of the sample corresponding to adjacent projections in the scanning direction satisfies the following condition:

$$d \in [\frac{h}{3sin\theta}, \frac{h}{2sin\theta}]$$

where, $h$ represents a thickness of the light sheet, and $\theta$ is an inclination angle of the light sheet with respect to the scanning direction.

The sample carrier moves continuously along the Z-direction to realize axial scanning, and the sample carrier moves by one step in the Z-direction for every cycle of rotation of the galvanometer. The displacement $L$ of the sample carrier in the Z direction is equivalent to the depth of field: $L \leq s * sin\theta$, where, $s$ represents a Rayleigh range of the light sheet, and $\theta$ is an inclination angle of the light sheet with respect to a scanning direction.

It will be obvious to those skilled in the art that changes and modifications may be made, and therefore, the aim in the appended claims is to cover all such changes and modifications.

## Claims

1. A single-objective microscopic imaging device, comprising:

   an illumination objective, a scanning lens group for relay, a galvanometer, an illumination module, and an imaging module; wherein:
   the scanning lens group comprises a first scanning lens and a second scanning lens; main optical axes of the first scanning lens and the second scanning lens are orthogonal and confocal; a common focus of the first scanning lens and the second scanning lens is disposed on a central part of the galvanometer;
   the illumination module is configured to generate an illumination laser beam; the illumination laser beam passes through the scanning lens group and enters a rear pupil plane of the illumination objective, forming a light sheet having an inclination angle $\alpha$ projected onto an excitation plane of a sample to excite fluorescence; the excitation plane is diagonally intersected with a main optical axis of the illumination objective, and an intersection angle of the excitation plane and the main optical axis of the illumination objective is an inclination angle $\theta$ of the light sheet;
   the fluorescence emitted from the excitation plane of the sample is collected by the illumination objective, enters the scanning lens group in an opposite direction of an illumination light of the illumination module, and reaches the imaging module for imaging, thus obtaining a projection of the excitation plane of the sample on an orthogonal plane of the main optical axis of the illumination objective; and
   the imaging module comprises an area array detector.

2. The device of claim 1, further comprising a sample carrier, **characterized in that** the sample carrier comprises an axial feeding device configured to drive the sample to move along an axis of the illumination objective; an axial position changes in a stepwise or continuous manner, and during a rotation period T of the galvanometer, an axial displacement L satisfies the following inequality:

$$L \leq s * sin\theta;$$

   wherein, s represents a Rayleigh range of the light sheet, and $\theta$ is an inclination angle of the light sheet with respect to a scanning direction.

3. The device of claim 1 or 2, **characterized in that** under the action of the galvanometer, the excitation plane of the sample is scanned in a direction perpendicular to the main optical axis of the illumination objective; after the fluorescence is reversely scanned by the galvanometer, projections of the excitation plane of the sample on the orthogonal plane of the main optical axis of the illumination objective are obtained sequentially at a position of the area array detector of the imaging module; and the projections are reconstructed and stacked, to yield a three-dimensional fluorescence image of the sample.

4. The device of claim 3, **characterized in that** an angle of the galvanometer is changed stepwise or continuously, so that the excitation plane of the sample is scanned in the direction perpendicular to the main optical axis of the illumination objective, and a displacement d of the excitation plane of the sample corresponding to adjacent projections in the scanning direction satisfies the following condition:

$$d \in [\frac{h}{3sin\theta}, \frac{h}{2sin\theta}]$$

   wherein, h represents a thickness of the light sheet, and $\theta$ is an inclination angle of the light sheet with respect to the scanning direction.

5. The device of claim 1 or 2, **characterized in that** a tube lens assembly is disposed between the scanning lens group and the illumination objective; the tube lens assembly is fixed in position relative to the scanning lens group for collimating a fluorescence signal collected by the illumination objective.

6. The device of claim 1 or 2, **characterized in that** the illumination module comprises a collimated laser and a modulator; the modulator comprises a mask plate; the illumination laser beam is modulated by the modulator to form a predetermined light sheet; the predetermined light sheet passes through a dichroic mirror, is merged with a fluorescent light path, and enters the scanning lens group.

7. The device of claim 6, **characterized in that** the thickness of the light sheet is between 0.3 and 5 $\mu$m.

8. The device of claim 1 or 2, **characterized in that** the imaging module further comprises a converging lens, and the area array detector is disposed on a focal plane of the converging lens; and the area array detector is configured to obtain the projection of the excitation plane of the sample on the orthogonal plane of the main optical axis of the illumination objective in a time sequence of control signals.

**9.** The device of claim 1 or 2, further comprising a depth of field extension module disposed between the scanning lens group and the converging lens for expanding a depth of field of the light sheet along the axis of an objective.

**10.** The device of claim 9, **characterized in that** the depth of field extension module is a phase modulation mask, a spatial light modulator, an axial prism, or a prism group.

FIG. 1

EP 4 528 351 A1

**FIG. 2**

**FIG. 3**

EP 4 528 351 A1

<div align="center">

**INTERNATIONAL SEARCH REPORT**

</div>

| International application No. |
| --- |
| **PCT/CN2024/082135** |

| A. | CLASSIFICATION OF SUBJECT MATTER |
| --- | --- |
| | G02B21/00(2006.01)i; G01N21/64(2006.01)i |

According to International Patent Classification (IPC) or to both national classification and IPC

| B. | FIELDS SEARCHED |
| --- | --- |

Minimum documentation searched (classification system followed by classification symbols)

IPC: G02B, G01N

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, VEN, CJFD: 显微镜, 荧光, 磷光, 激光, 激发, 光片, 振镜, 扫描, 共焦, 共轭, 反射, 正交, 垂直, microscop+, fluorescenc+, phosphorescenc+, laser+, light+, sheet+, plane+, induc+, excit+, galvano+, galvo+, scan+, focus+, focal+, confoc+, common+, conjugat+, reflect+, orthogon+, vertic+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116107076 A (WUHAN HUIGUAN BIOTECHNOLOGY CO., LTD.) 12 May 2023 (2023-05-12)<br>claims 1-10, description, paragraphs 22-55, and figures 1-3 | 1-10 |
| Y | CN 112925089 A (LEICA MICROSYSTEMS CMS GMBH) 08 June 2021 (2021-06-08)<br>description, paragraphs 45-113, and figures 1-7 | 1-10 |
| Y | CN 109477954 A (THE TRUSTEES OF COLUMBIA UNIVERSITY IN THE CITY OF NEW YORK) 15 March 2019 (2019-03-15)<br>description, paragraphs 46-109, and figures 1-6 | 1-10 |
| Y | CN 110178069 A (THE TRUSTEES OF COLUMBIA UNIVERSITY IN THE CITY OF NEW YORK) 27 August 2019 (2019-08-27)<br>description, paragraphs 14-139, and figures 1-7 | 1-10 |
| Y | US 2022155575 A1 (CARL ZEISS MICROSCOPY GMBH) 19 May 2022 (2022-05-19)<br>description, paragraphs 127-204, and figures 1-13 | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2024** | **12 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/082135** |

**C.    DOCUMENTS CONSIDERED TO BE RELEVANT**

| Category* | Citation of document, with indication, where appropriate, of the relevant passages | Relevant to claim No. |
|---|---|---|
| A | CN 115685515 A (HUAZHONG UNIVERSITY OF SCIENCE AND TECHNOLOGY) 03 February 2023 (2023-02-03)<br>    entire document | 1-10 |

Form PCT/ISA/210 (second sheet) (July 2022)

**EP 4 528 351 A1**

| INTERNATIONAL SEARCH REPORT<br>Information on patent family members | | | | International application No.<br>**PCT/CN2024/082135** | | |
|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 116107076 | A | 12 May 2023 | None | | | |
| CN | 112925089 | A | 08 June 2021 | None | | | |
| CN | 109477954 | A | 15 March 2019 | JP | 2019518242 | A | 27 June 2019 |
| | | | | EP | 3465319 | A1 | 10 April 2019 |
| | | | | EP | 3465319 | A4 | 19 February 2020 |
| | | | | US | 2020249168 | A1 | 06 August 2020 |
| | | | | US | 10908088 | B2 | 02 February 2021 |
| | | | | WO | 2017210182 | A1 | 07 December 2017 |
| CN | 110178069 | A | 27 August 2019 | EP | 3538940 | A1 | 18 September 2019 |
| | | | | US | 2019302437 | A1 | 03 October 2019 |
| | | | | US | 11036037 | B2 | 15 June 2021 |
| | | | | WO | 2018089865 | A1 | 17 May 2018 |
| | | | | US | 2021373311 | A1 | 02 December 2021 |
| | | | | US | 11604342 | B2 | 14 March 2023 |
| US | 2022155575 | A1 | 19 May 2022 | WO | 2020156671 | A1 | 06 August 2020 |
| | | | | EP | 3918397 | A1 | 08 December 2021 |
| | | | | EP | 3918397 | B1 | 10 January 2024 |
| CN | 115685515 | A | 03 February 2023 | None | | | |

Form PCT/ISA/210 (patent family annex) (July 2022)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115685515 A